# DEMANDE DE BREVET EUROPEEN

(11) **EP 4 764 232 A1**
(43) Date de publication de la demande: **24.06.2026**
(21) Numéro de dépôt: 24307216.2
(22) Date de dépôt: 20.12.2024
(51) Int. Cl.: F16B 13/06

(54) **CHEVILLE À EXPANSION ET ASSEMBLAGE DE CHEVILLE À EXPANSION**

(71) Demandeur: Illinois Tool Works Inc., Glenview, IL 60025 (US)
(72) Inventeur: LEJAULT, David, Glenview, 60025 (US); MONDELIN, Alexandre, Glenview, 60025 (US); COUVREUR, Jérôme, Glenview, 60025 (US)
(74) Mandataire: HGF

(57) **Abrégé**

Cheville à expansion (1) comprenant une tête (2) ayant une collerette (5) et un manchon (3) qui s'étend suivant une direction longitudinale à partir de la collerette (5) et qui comprend une partie déformable formée de languettes d'expansion délimitées par des fentes (7) prévues à travers la paroi du manchon (3) et s'étendant le long de celui-ci, ladite cheville à expansion (1) comportant en outre un canal ouvert au niveau de la collerette (5) pour recevoir un élément de fixation et disposé de sorte que les languettes d'expansion se déploient vers l'extérieur lorsque l'élément de fixation est inséré dans le canal à partir de la collerette (5) ; et un cylindre de vissage (13) disposé à une extrémité opposée du canal par rapport à la collerette (5) et formé d'une portion portant un moyen de préhension de filetage, ledit cylindre de vissage (13) étant configuré pour être engagé par une portion portant un filetage mâle de l'élément de fixation lorsque ledit élément de fixation est vissé dans le canal (8), de manière à tirer ledit cylindre de vissage (13) vers la collerette (5) par la rotation de l'élément de fixation afin d'étendre les languettes d'expansion vers l'extérieur du manchon, ladite cheville à expansion (1) étant telle que les fentes (7) s'étendent chacune jusqu'à la collerette (5).

## Description

### Domaine technique de l'invention

L'invention concerne généralement une cheville à expansion et un assemblage de cheville à expansion.

### Arrière-plan technique

Les chevilles à expansion sont généralement utilisées pour fixer un objet dans une structure de support telle qu'un mur en plaques de plâtre, en béton ou en briques. Une cheville à expansion est insérée dans un trou de la structure de support et un élément de fixation tel qu'une vis, un clou ou un clou-vis est inséré dans la cheville à expansion. La cheville à expansion se déploie vers l'extérieur, ce qui permet de fixer l'élément de fixation dans le trou.

Certaines chevilles à expansion, telles que celle décrite dans le document EP4438912A1, conviennent à l'expansion dans des structures de support constituées de différents matériaux et ayant différentes épaisseurs.

Or, il arrive qu'en opération, certains ancrages soient difficiles à réaliser sur des structures endommagées pouvant être irrégulières et particulièrement fines en certains endroits. C'est le cas par exemple lorsqu'un opérateur a percé simultanément et avec le même outil deux objets en matériaux différents, tels qu'un longeron métallique et une paroi en brique sur laquelle est posée le longeron. Dans cet exemple, la brique comme deuxième structure de support subit des percussions pour le perçage du longeron métallique et devient cassante ou friable à l'endroit du perçage, ce qui engendre une perte de matière locale qui limite la bonne tenue d'une cheville à expansion qu'on vient ancrer dans ce double perçage.

Ainsi, les chevilles connues ne sont pas assez efficaces lorsque l'épaisseur des structures de support est faible, ce qui arrive en cas de dégradation supplémentaire de la structure de support qui est derrière qui n'est plus assez robuste pour assurer un maintien.

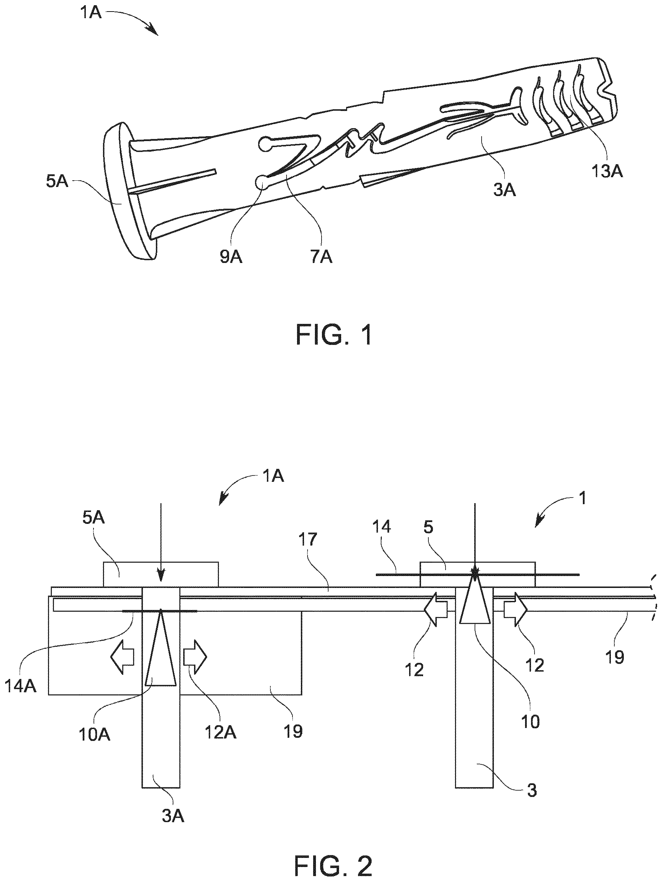

La Figure 1 illustre une cheville à expansion de l'art antérieur qui comprend une tête ayant
une collerette 5A, et un manchon 3A qui s'étend suivant une direction longitudinale à partir de la collerette 5A.

Le manchon 3A comprend une partie déformable formée de languettes d'expansion délimitées par des fentes 7A prévues à travers la paroi du manchon 3A et s'étendant le long de celui-ci.

La cheville 1A comporte en outre un canal ouvert au niveau de la collerette pour recevoir un élément de fixation.

Ledit canal est disposé de sorte que les languettes d'expansion se déploient vers l'extérieur lorsque l'élément de fixation est poussé dans le canal à partir de la collerette.

La cheville 1 comporte un cylindre de vissage 13A disposé à une extrémité opposée du canal par rapport à la collerette et formé d'une portion portant un moyen de préhension de filetage.

Le cylindre de vissage 13A est configuré pour être engagé par une portion portant un filetage mâle de l'élément de fixation lorsque ledit élément de fixation est vissé dans le canal, de manière à tirer ledit cylindre de vissage 13A vers la collerette 5A par la rotation de l'élément de fixation afin d'étendre transversalement les languettes d'expansion vers l'extérieur du manchon 3A.

Il serait souhaitable de fournir une cheville à expansion qui réponde aux problèmes identifiés ci-dessus. En particulier, l'invention a pour objet de fournir une cheville à expansion ayant une meilleure performance de maintien lorsqu'elle est utilisée avec une variété de structures de support différents, notamment des structures fines superposées.

### Résumé de l'invention

L'invention a pour but de pallier au moins certains des inconvénients précités et de proposer une cheville d'ancrage capable de cumuler des avantages de rapidité, simplicité et fiabilité pour sa mise en oeuvre, et ce même sur de faibles épaisseurs de structures de support.

Au vu de ce qui précède, l'invention a pour objet une cheville à expansion comprenant une tête ayant une collerette et un manchon qui s'étend suivant une direction longitudinale à partir de la collerette et qui comprend une partie déformable formée de languettes d'expansion délimitées par des fentes prévues à travers la paroi du manchon et s'étendant le long de celui-ci, ladite cheville à expansion comportant en outre un canal au moins ouvert au niveau de la collerette pour recevoir un élément de fixation et disposé de sorte que les languettes d'expansion se déploient vers l'extérieur lorsque l'élément de fixation est inséré dans le canal à partir de la collerette jusqu'à un cylindre de vissage du manchon disposé à une extrémité opposée du canal par rapport à la collerette et formé d'une portion portant un moyen de préhension de filetage, ledit cylindre de vissage étant configuré pour être engagé par une portion portant un filetage mâle de l'élément de fixation lorsque ledit élément de fixation est vissé dans le canal, de manière à tirer ledit cylindre de vissage vers la collerette par la rotation de l'élément de fixation afin d'étendre les languettes d'expansion vers l'extérieur du manchon, les fentes s'étendant chacune au moins jusqu' à la collerette. L'extension des fentes au moins jusqu'à la collerette permet de favoriser l'expansion de la cheville à expansion au plus près et/ou dans la collerette, et ainsi d'assurer un ancrage satisfaisant même en cas de structures de support de faibles épaisseurs. Une telle expansion de la cheville à expansion lors de l'insertion de l'élément de fixation assure le blocage en rotation de la cheville à expansion dans la ou les structures de support pour son vissage, même en cas de structures de support de faible épaisseur.

Par exemple, les fentes s'étendent jusqu'à la collerette et se poursuivent au moins partiellement dans ladite collerette.

Par exemple, les fentes créent une encoche longitudinale dans la collerette.

Par exemple, l'encoche longitudinale est arrondie ou forme un arrondi dans la collerette.

Par exemple, les fentes traversent le manchon et la collerette de part en part.

Par exemple, la collerette comprend une surface d'appui orientée vers le cylindre de vissage, les fentes pénétrant dans la collerette par la surface d'appui.

La surface d'appui peut être agencée sensiblement perpendiculairement à la direction longitudinale.

Par exemple, le canal comprend une portion de maintien s'étendant longitudinalement et conçue pour maintenir une extrémité de l'élément de fixation avant son insertion dans le cylindre de vissage et une portion de réception s'étendant longitudinalement dans le manchon depuis la portion de maintien dans une direction opposée à la collerette et conçue pour recevoir l'élément de fixation après son insertion jusqu'au cylindre de vissage, la portion de maintien s'étendant au moins en partie dans la collerette. Le fait que la portion de maintien s'étende au moins en partie dans la collerette permet de limiter toute action d'expansion de l'élément de fixation sur la cheville à expansion lors du maintien de son extrémité dans la portion de maintien du canal.

Par exemple, la portion de maintien du canal comprend une lèvre ou une pluralité de protubérances faisant saillie radialement vers l'intérieur de la cheville à expansion et axialement dans une direction opposée au cylindre de vissage, la lèvre ou les protubérances définissant ainsi une extrémité longitudinale du canal. La lèvre ou les protubérance permettent d'augmenter l'étendue axiale de la portion de maintien dans la collerette et ainsi de la limiter dans le manchon, afin de limiter toute action d'expansion de l'élément de fixation sur la cheville à expansion avant son insertion dans le canal jusqu'au cylindre de vissage, notamment lorsque son extrémité est maintenue dans la portion de maintien du canal.

Par exemple, la portion de maintien du canal comprend une première partie s'évasant dans la direction longitudinale depuis une extrémité longitudinale du canal, optionnellement depuis la lèvre ou les protubérances, et une deuxième partie se rétrécissant suivant la direction longitudinale depuis la première partie jusqu'à la portion de réception du canal.

Par exemple, au moins l'une des extrémités des fentes est terminée par un rond ou en arrondie.

Par exemple, la collerette comprend une surface d'appui orientée vers le cylindre de vissage, le canal présentant une première section transversale d'une première aire, ladite première aire étant prise axialement à une intersection de la collerette et du manchon, et une deuxième section transversale d'une deuxième aire prise à une distance axiale de la première aire, dans laquelle la distance axiale est égale à 5 millimètres, et dans laquelle la deuxième aire est inférieure ou égale à 65% de la première aire. Les première et deuxième aires sont des aires d'absence de matière dans le canal. La première aire est par exemple prise au niveau d'une surface d'appui de la collerette, notamment lorsque celle-ci est orientée perpendiculairement à la direction axiale. Une deuxième aire réduite d'au moins 35% par rapport à la première aire permet de favoriser l'expansion de la cheville à expansion au plus près de et/ou dans la collerette.

Par exemple, le canal est disposé de sorte que les languettes d'expansion se déploient vers l'extérieur lorsque l'élément de fixation est poussé (par exemple frappé ou martelé) dans le canal à partir de la collerette jusqu'au cylindre de vissage.

La cheville à expansion peut ainsi présenter de deux modes d'expansion différents, selon que l'élément de fixation est poussé (par exemple frappé ou martelé) dans le canal ou vissé dans le canal. Lorsque l'élément de fixation est poussé dans le canal dans un premier mode d'expansion, les languettes d'expansion de la cheville à expansion se déploient vers l'extérieur (gonflement de la cheville à expansion) pour s'engager dans la ou les structures de support, afin de maintenir la cheville à expansion contre la structure de support. Si la force de maintien contre la structure de support n'est pas suffisante, par exemple si la ou les structures de support sont faites d'un matériau non compact ou sont trop fines, la cheville à expansion peut être utilisée dans le second mode d'expansion en vissant l'élément de fixation pour qu'il s'engage dans la portion portant un moyen de préhension de filetage de la cheville à expansion afin d'étendre les languettes d'expansion vers l'extérieur (par exemple en se déformant en torsion et/ou en s'enroulant pour former un noeud), ce qui augmente encore la force de maintien contre la structure de support. Ceci est particulièrement avantageux car la performance de maintien de la cheville à expansion varie pour permettre l'insertion et le maintien de la cheville à expansion dans des structures de support faites de différents matériaux et ayant des épaisseurs différentes. Le vissage de l'élément de fixation peut intervenir directement ou après frappe de l'élément de fixation.

L'invention concerne également un ensemble de cheville à expansion, comprenant une cheville à expansion telle que décrite ci-dessus, et un élément de fixation configuré pour être inséré, par exemple par frappe, dans le canal et pour être ancré dans celui-ci par vissage.

### Brève description des figures

L'invention sera mieux comprise à l'étude détaillée d'un mode de réalisation pris à titre d'exemple non limitatif et illustré par les dessins annexés, sur lesquels :
[Fig 1] représente une cheville à expansion de l'art antérieur en vue en perspective.
[Fig 2] représente comparativement une cheville à expansion de l'art antérieur et une cheville à expansion selon l'invention, chacune insérée dans un substrat à deux couches.
[Fig 3] représente une exemple de cheville à expansion selon l'invention en vue en perspective.
[Fig 4] représente la cheville à expansion illustrée à la figure 3 en vue en coupe.
[Fig 5] représente un élément de fixation inséré dans une portion de maintien de la cheville à expansion illustrée aux figures 3 et 4.
[Fig 6] représente la cheville à expansion illustrée aux figures 3 à 5 en vue en coupe longitudinale, et en coupes transversales selon deux sections d'aires.

### Description détaillée de l'invention

La Figure 2 illustre comparativement une cheville à expansion 1A de l'art antérieur, à gauche, et une cheville à expansion 1 selon l'invention, à droite, chacune insérée dans un substrat à deux couches 17,19.

Les deux couches comportent par exemple une couche supérieure 17 comportant un longeron métallique, placée sur une couche supérieure 19 formée par exemple par de la brique, du parpaing, du béton...

Dans l'art antérieur, la cheville à expansion 1A doit être introduite dans un substrat d'épaisseur plus importante pour garantir un ancrage fiable de la cheville à expansion 1A dans ce substrat lorsque ses languettes d'expansion s'étendent selon la direction transversale 12A par vissage de l'élément de fixation dans le canal 8.

L'élément de fixation est par exemple un clou en acier inoxydable ayant une tige filetée dans sa partie inférieure.

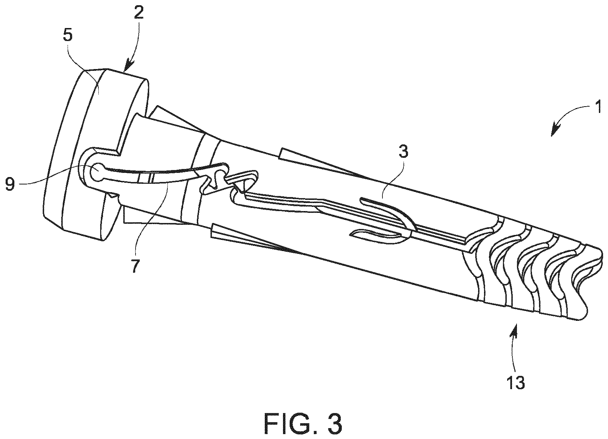

Les figures 3 à 6 montrent plus en détail un exemple de cheville à expansion 1 selon l'invention.

La cheville à expansion 1 comprend une tête 2 ayant une collerette 5 et un manchon 3 qui s'étend suivant une direction longitudinale à partir de la collerette 5.

Le manchon 3 comprend une partie déformable formée de languettes d'expansion délimitées par des fentes 7 prévues à travers la paroi du manchon 3 et s'étendant le long de celui-ci (figure 3).

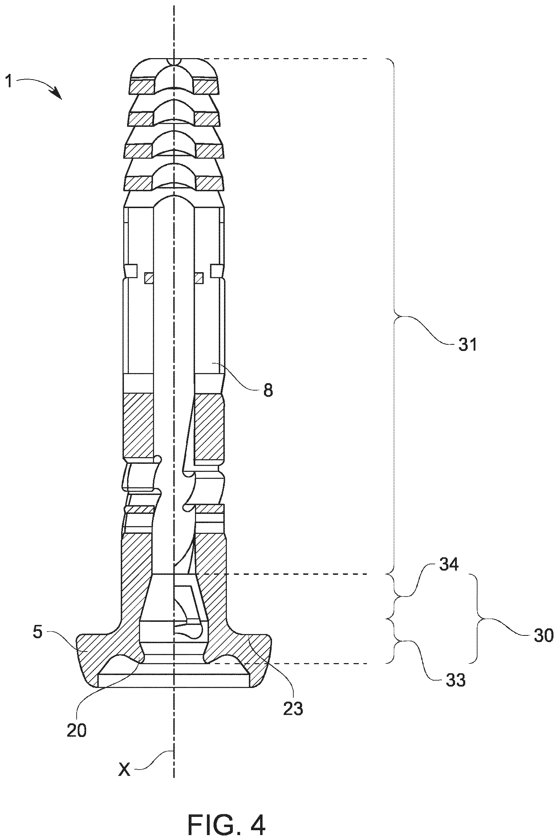

La cheville à expansion 1 comporte en outre un canal 8 ouvert au niveau de la collerette 5 pour recevoir un élément de fixation (figure 4). Le canal 8 peut aussi être ouvert au niveau du cylindre de vissage 13 décrit ci-après.

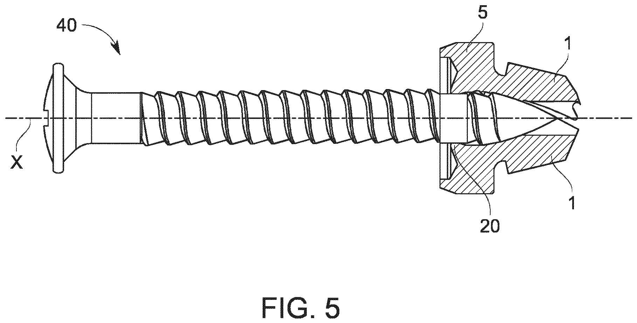

Ledit canal 8 est par exemple disposé de sorte que les languettes d'expansion se déploient vers l'extérieur, notamment transversalement, c'est-à-dire selon la direction transversale 12, lorsqu'un élément de fixation 40 est inséré dans le canal 8 suivant la direction longitudinale à partir de la collerette 5. L'élément de fixation 40 peut être vissé ou poussé (par exemple frappé ou martelé) suivant la direction longitudinale dans le canal 8 à partir de la collerette 5. Ce déploiement des languettes d'expansion peut correspondre à ungonflement de la cheville à expansion 1. Un exemple d'élément de fixation 40 est montré à la figure 5.

Ce déploiement se fait à partir du plan d'appui 14,14A qui est un plan sensiblement perpendiculaire à l'axe longitudinal et passant par l'extrémité 9,9A des fentes 7,7A (figure 2).

La cheville à expansion 1 comporte aussi un cylindre de vissage 13 disposé à une extrémité opposée du canal 8 par rapport à la collerette 5 et formé d'une portion portant un moyen de préhension de filetage (figure 4).

Le cylindre de vissage 13 est configuré pour être engagé par une portion portant un filetage mâle de l'élément de fixation 40 lorsque ledit élément de fixation 40 est vissé dans le canal 8, de manière à tirer ledit cylindre de vissage 13 vers la collerette 5 par la rotation de l'élément de fixation 40 afin d'étendre transversalement les languettes d'expansion vers l'extérieur du manchon 3. Cette extension des languettes d'expansion peut être réalisé par la déformation en torsion des languettes d'expansion et/ou par enroulement des languettes d'expansion de manière à former un noeud.

Comme illustré par les Figures 2 à 4, les fentes 7 s'étendent chacune jusqu'à la collerette 5, ce qui permet de former, depuis le plan d'appui 14 un cône de déformation 10 pour la partie déformable par les languettes d'expansion qui soit bien plus rapproché de la collerette 5 que le cône de déformation 10Ades chevilles à expansion de l'art antérieur, lesquelles nécessitent donc un substrat 17,19 plus épais pour l'ancrage de la cheville à expansion 1A.

Comme illustré par la Figure 2, le plan d'appui 14A de l'art antérieur se trouve au niveau du substrat 17,19, ce qui limite radialement le déploiement des languettes et permet une friction suffisante au niveau du cône de déformation formé par ce déploiement pour empêcher la rotation de la cheville à expansion 1A lors du vissage de l'élément de fixation 40 dans ladite cheville à expansion 1A.

En revanche, en l'absence de substrat 17,19 face aux languettes lors de leur déploiement, cette friction n'a pas lieu dans l'art antérieur, puisque le plan d'appui 14A qui marque le début du cône de déformation se trouve en bord voir en-dessous du substrat 17,19, et cette absence de friction libère la cheville à expansion 1A en rotation, la laissant apte à tourner sur elle-même lors de son vissage. Etendre les fentes 7 formant les languettes d'expansion de la cheville à expansion 1 selon l'invention jusqu'à la collerette 5 permet ainsi de pallier ce problème, la cheville à expansion 1 étant bloquée en rotation du fait de l'expansion de la cheville à expansion 1 au plus près de collerette 5.

Par exemple, les fentes 7 s'étendent jusqu'à la collerette 5 et se poursuivent au moins partiellement dans ladite collerette 5 (figure 3). Les fentes 7 peuvent s'étendre au-delà de la face inférieure de la collerette 5 de manière à se poursuivre au moins partiellement dans ladite collerette 5.

La cheville à expansion 1 de l'invention offre ainsi un plan d'appui 14 situé au plus près et/ou dans la collerette 5, et donc toujours au-dessus du substrat 17,19, permettant au cône de déformation de toujours être en face d'une épaisseur de substrat 17,19 (figure 2).

Les fentes 7 créent par exemple une encoche longitudinale dans la collerette 5 (figure 3). L'encoche peut être arrondie ou former un arrondi.

Au moins l'une des extrémités 9 des fentes 7 est par exemple terminée par un rond ou en arrondie, comme illustré par la Figure 3, ce qui permet à chaque fente 9 d'éviter la constitution d'un point de rupture à son extrémité 9 qui serait susceptible d'entrainer une propagation de fissure lors de l'opération d'expansion. Cette caractéristique peut être répétée à chaque extrémité 9 de chaque fente 7. L'extrémité 9 peut correspondre à l'encoche longitudinale mentionnée ci-dessus. Le rapprochement des extrémités 9 des fentes 7 jusqu'à la collerette 5 permet donc d'ancrer la cheville à expansion 1 dans un substrat plus fin que les chevilles à expansion 1A de l'art antérieur.

Les fentes 7 traversent le manchon 3 et la collerette 5 de part en part, par exemple perpendiculairement à la direction axiale.

La collerette 5 comprend par exemple une surface d'appui 23 orientée vers le cylindre de vissage 13, les fentes 7 pénétrant dans la collerette 5 par la surface d'appui 23 (figures 3 et 4).

La surface d'appui 23 peut être agencée sensiblement perpendiculairement à la direction longitudinale.

En variante, la surface d'appui au lieu d'être plane et sensiblement perpendiculaire (tête d'élément de fixation 40 dite « plate ») peut être tronconique (tête d'élément de fixation dite « fraisée »).

Le canal 8 comprend par exemple une portion de maintien 30 s'étendant longitudinalement et conçue pour maintenir une extrémité ou pointe de l'élément de fixation 40 avant son insertion dans le cylindre de vissage 13 et une portion de réception 31 s'étendant longitudinalement dans le manchon depuis la portion de maintien 30 dans une direction opposée à la collerette 5 et conçue pour recevoir l'élément de fixation 40 après son insertion jusqu'au cylindre de vissage 13 (figures 4 et 5). La portion de maintien 30 s'étend au moins en partie dans la collerette 5.

La portion de maintien 30 qui s'étend dans la collerette 5 a pour fonction d'assurer un maintien de l'élément de fixation 40 tout en évitant que l'élément de fixation 40 ait une action d'expansion sur la cheville à expansion 1 lorsque son extrémité ou sa pointe est maintenue dans la portion de maintien 30, c'est-à-dire avant sa frappe ou son vissage.

Par exemple, la portion de maintien 30 du canal comprend une lèvre 20 faisant saillie radialement vers l'intérieur de la cheville à expansion 1 et axialement dans une direction opposée au cylindre de vissage 13, la lèvre 20 définissant ainsi une extrémité longitudinale du canal (figures 4 et 5). La lèvre 20 s'étend axialement vers l'extrémité de la collerette 5 pour gagner de la distance axialement pour le maintien de l'élément de fixation 40.

La lèvre 20 peut être continue. En variante, la lèvre 20 peut être discontinue, formant ainsi une pluralité de protubérances.

La lèvre s'étend par exemple circonférentiellement. La lèvre 20 peut s'étendre circonférentiellement autour de l'ouverture permettant le passage de l'élément de fixation 40 dans l'ouverture vers le canal 8.

Par exemple, la portion de maintien 30 du canal 8 comprend une première partie 33 s'évasant dans la direction longitudinale depuis l'extrémité longitudinale du canal 8, par exemple depuis la lèvre 20, et une deuxième partie 34 se rétrécissant suivant la direction longitudinale depuis la première partie 33 jusqu'à la portion de réception 31 du canal 8 (figure 4).

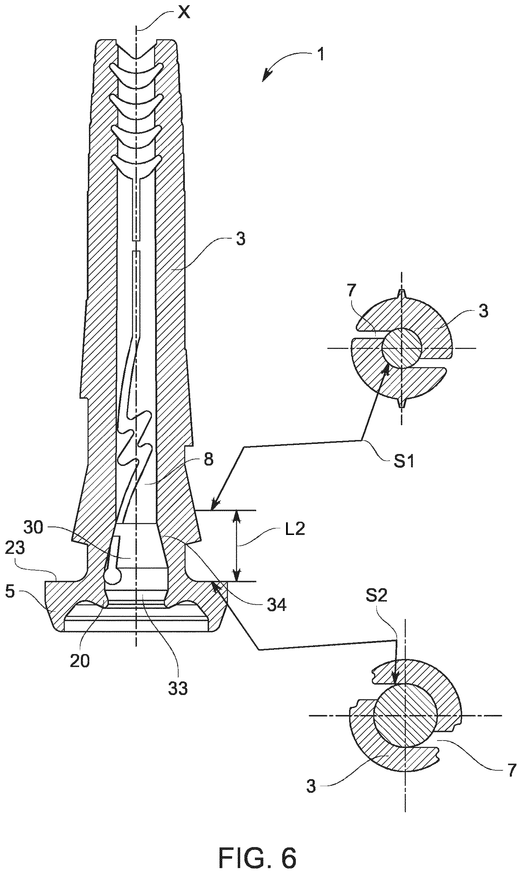

Comme illustré par la Figure 6 qui représente la cheville à expansion 1 en vue en coupe longitudinale, et en coupes selon les deux sections d'aires S1 et S2, le canal 8 présente par exemple une première section transversale d'une première aire S1, ladite première aire S1 étant prise axialement au niveau de la surface d'appui 23, et une deuxième section transversale d'une deuxième aire S2 prise à une distance axiale L2 de la première aire S1, la distance axiale L2 étant égale à 5 millimètres. La deuxième aire S2 est inférieure ou égale à 65% de la première aire S1. Les première et deuxième aires S1, S2 sont des aires d'absence de matière du canal 8.

La relation entre la première aire S1 et la deuxième aire S2 à la distance L2 a pour fonction de favoriser l'expansion des languettes d'expansion au plus près et/ou dans la collerette 5.

La cheville à expansion 1 peut présenter deux modes d'expansion différents, selon que l'élément de fixation 40 est poussé dans le canal 8, par exemple en étant frappé ou martelé, ou vissé dans le canal 8.

Lorsque l'élément de fixation est poussé dans le canal 8 dans un premier mode d'expansion, les languettes d'expansion se déploient vers l'extérieur (gonflement de la cheville à expansion 1) pour s'engager dans le substrat 17, 19, afin de maintenir la cheville à expansion 1 contre ce substrat 17,19 formant une structure de support. Si la force de maintien n'est pas suffisante, par exemple si la structure de support est faite d'un matériau pas assez compact ou est fine, la cheville à expansion 1 peut être utilisée dans le second mode d'expansion en vissant l'élément de fixation 40 pour qu'il s'engage dans la partie filetée de la cheville à expansion 1 afin d'étendre les languettes d'expansion vers l'extérieur (par exemple en se déformant en torsion et/ou en s'enroulant pour former un noeud), ce qui augmente encore la force de maintien contre la structure de support. Pour obtenir le second mode d'expansion, l'élément de fixation 40 peut aussi d'abord être frappé ou martelé, puis vissé.

La présente invention a pour avantage d'obtenir une expansion de la cheville à expansion 1 lors de l'insertion de l'élément de fixation 40 au plus près et/ou dès la collerette 5 afin d'assurer un blocage suffisant de la cheville à expansion 1 par rapport à la structure de support sur laquelle elle est monté en vue du vissage de l'élément de fixation 40 (second mode d'expansion), même en cas de structures de support fines.

### Liste de signes de référence

1,1A cheville à expansion
2 tête
5 collerette
3, 3A manchon
5A collerette dans l'art antérieur
7, 7A fente
8 canal
9, 9A extrémité de fente
10 cône de déformation
12, 12A sens de déploiement transversal
13, 13A cylindre de vissage
14, 14A plan d'appui
17 substrat supérieur
19 substrat inférieur
20 lèvre
23 surface d'appui
30 portion de maintien
31 portion de réception
33 première partie
34 deuxième partie
40 élément de fixation
S1 première aire
S2 deuxième aire
L2 longueur égale à la distance axiale entre S1 et S2

## Revendications

1. Cheville à expansion (1) comprenant une tête (2) ayant une collerette (5) et un manchon (3) qui s'étend suivant une direction longitudinale (X) à partir de la collerette (5) et qui comprend une partie déformable formée de languettes d'expansion délimitées par des fentes (7) prévues à travers la paroi du manchon (3) et s'étendant le long de celui-ci, ladite cheville à expansion (1) comportant en outre un canal (8) longitudinal au moins ouvert au niveau de la collerette (5) pour recevoir un élément de fixation (40), le canal (8) étant disposé de sorte que les languettes d'expansion se déploient vers l'extérieur lorsque l'élément de fixation (40) est inséré dans le canal (8) à partir de la collerette (5) jusqu'à un cylindre de vissage (13) ; le manchon (3) comprenant en outre ledit cylindre de vissage (13) disposé à une extrémité opposée du canal (8) par rapport à la collerette (5) et formé d'une portion portant un moyen de préhension de filetage, ledit cylindre de vissage (13) étant configuré pour être engagé par une portion portant un filetage mâle de l'élément de fixation (40) lorsque ledit élément de fixation (40) est vissé dans le canal (8), de manière à tirer ledit cylindre de vissage (13) vers la collerette (5) par la rotation de l'élément de fixation (40) afin d'étendre les languettes d'expansion vers l'extérieur du manchon (3), ladite cheville à expansion (1) étant **caractérisée en ce que** les fentes (7) s'étendent chacune au moins jusqu'à la collerette (5).

2. Cheville à expansion (1) selon la revendication 1, dans laquelle les fentes (7) créent une encoche longitudinale, optionnellement arrondie, dans la collerette (5).

3. Cheville à expansion (1) selon l'une quelconque des revendications 1 ou 2, dans laquelle la collerette (5) comprend une surface d'appui (23) orientée vers le cylindre de vissage (13) et optionnellement agencée sensiblement perpendiculairement à la direction longitudinale, les fentes (7) pénétrant dans la collerette (5) par la surface d'appui (23).

4. Cheville à expansion (1) selon l'une quelconque des revendications 1 à 3, dans laquelle les fentes (7) traversent le manchon (3) et la collerette (5) de part en part

5. Cheville à expansion (1) selon l'une quelconque des revendications 1 à 4, dans laquelle les fentes (7) s'étendent jusqu'à la collerette (5) et se poursuivent au moins partiellement dans ladite collerette (5).

6. Cheville à expansion (1) selon l'une quelconque des revendications 1 à 5, dans laquelle au moins l'une des extrémités longitudinales (9) des fentes (7) se termine par un rond ou en arrondie

7. Cheville à expansion (1) selon l'une quelconque des revendications 1 à 6, dans laquelle le canal (8) comprend une portion de maintien (30) s'étendant longitudinalement et conçue pour maintenir une extrémité de l'élément de fixation (40) avant son insertion dans le cylindre de vissage (13) et une portion de réception (31) s'étendant longitudinalement dans le manchon (3) depuis la portion de maintien (30) dans une direction opposée à la collerette (5) et conçue pour recevoir l'élément de fixation (40) après son insertion jusqu'au cylindre de vissage (13), et dans laquelle la portion de maintien (30) s'étend au moins en partie dans la collerette (5).

8. Cheville à expansion (1) selon la revendication 7, dans laquelle la portion de maintien (30) du canal (8) comprend une lèvre (20) ou une pluralité de protubérances faisant saillie radialement vers l'intérieur de la cheville à expansion (1) et axialement dans une direction opposée au cylindre de vissage (13), la lèvre (20) ou les protubérances définissant ainsi une extrémité longitudinale du canal (8).

9. Cheville à expansion (1) l'une quelconque des revendications 7 ou 8, dans laquelle la portion de maintien (30) du canal (8) comprend une première partie (33) s'évasant dans la direction longitudinale depuis une extrémité longitudinale du canal (8), optionnellement depuis la lèvre (20) ou les protubérances, et une deuxième partie (34) se rétrécissant suivant la direction longitudinale depuis la première partie (33) jusqu'à la portion de réception (31) du canal (8).

10. Cheville à expansion (1) selon l'une quelconque des revendications 1 à 9, dans laquelle le canal (8) présentant une première section transversale d'une première aire (S1), ladite première aire (S1) étant prise axialement au niveau d'une intersection de la collerette (5) et du manchon (3) et une deuxième section transversale d'une deuxième aire (S2) prise à une distance axiale (L2) de la première aire (S1), dans laquelle la distance axiale (L2) est égale à 5 millimètres, et dans laquelle la deuxième aire (S2) est inférieure ou égale à 65% de la première aire (S1).

11. Cheville à expansion (1) selon l'une quelconque des revendications 1 à 10, dans laquelle le canal (8) est disposé de sorte que les languettes d'expansion se déploient vers l'extérieur lorsque l'élément de fixation (40) est poussé dans le canal (8) à partir de la collerette (5) jusqu'au cylindre de vissage (13).

12. Ensemble de cheville à expansion, comprenant une cheville à expansion (1) selon l'une quelconque des revendications 1 à 11 et un élément de fixation (40) configuré pour être inséré dans le canal (8) et pour être ancré dans celui-ci par vissage.

13. Ensemble de cheville à expansion, dans lequel l'élément de fixation (40) est configuré pour être inséré par frappe dans le canal (8).
